# FASCICULE DE BREVET EUROPEEN

(11) **EP 1 735 594 B1**
(45) Date de publication et mention de la délivrance du brevet: **14.08.2019**
(21) Numéro de dépôt: 05736559.5
(22) Date de dépôt: 11.03.2005
(51) Int. Cl.: G01D 4/00

(54) **DISPOSITIF ET PROCEDE DE FIXATION ET POSITIONNEMENT D"UN SYSTEME DE LECTURE OPTIQUE POUR COMPTEURS D"ELECTRICITE**
EINRICHTUNG UND VERFAHREN ZUM FIXIEREN UND POSITIONIEREN EINES OPTISCHEN LESESYSTEMS FÜR STROMZÄHLER
DEVICE AND METHOD FOR FIXING AND POSITIONING AN OPTICAL READING SYSTEM FOR ELECTRICITY METERS

(30) Priorité: 12.03.2004 FR 0450505
(43) Date de publication de la demande: 27.12.2006
(73) Titulaire: Fludia, 92380 Garches (FR)
(72) Inventeur: BONS, Marc, F-92380 Garches (FR)
(74) Mandataire: Novagraaf Technologies
(86) Numéro de dépôt international: PCT/FR2005/000599
(87) Numéro de publication internationale: WO 2005/098369

(56) Documents cités:
- FR-A- 2 614 098
- GB-A- 2 185 812
- US-A- 5 214 587

## Description

La présente invention se rapporte au domaine des dispositifs et systèmes destinés à lire de manière automatique une mesure réalisée par un compteur d'électricité.

De tels dispositifs et systèmes existent pour des besoins d'acquisition d'informations liées à la consommation électrique. Ils peuvent comporter une fonction de stockage des dites informations. Ils peuvent comporter une fonction de collecte des dites informations, cette fonction de collecte pouvant être automatique.

Dans certains de ces dispositifs et systèmes, la lecture optique des compteurs d'électricité de type électromécanique peut consister à détecter le passage d'une marque spécifique présente sur le disque rotatif dont sont équipés lesdits compteurs.

Ainsi, l'art antérieur connaît déjà la demande de brevet anglais GB 2172399 qui décrit un dispositif pour convertir le mouvement d'un compteur électromécanique en données numériques.

Le problème de cette solution réside dans le fait que le montage et la fixation du dispositif d'acquisition sont des opérations délicates qui nécessitent une intervention minutieuse et peuvent conduire à des échecs. En particulier, le montage et la fixation nécessitent normalement le recours à un intervenant qualifié.

L'art antérieur connaît également la demande de brevet français FR 03/06177, qui décrit un dispositif et procédé d'acquisition d'une mesure réalisée par un compteur.

Le problème de cette solution est que, dans le cas des compteurs électromécaniques, le positionnement du dispositif et en particulier du capteur optique est très lié à un repérage visuel simple qui peut conduire à des échecs dans une proportion de cas non négligeable.

L'art antérieur connaît également, par le brevet US5214587, un dispositif d'acquisition de mesures ayant un moyen de positionnement rapide et un moyen de positionnement précis. Dans cette solution, les moyens de positionnement rapide (ouverture et fente) et précis (capteur infrarouge) sont solidaires d'une même pièce.

On connaît également, par la demande de brevet FR2614098, un dispositif pour supporter un capteur optique destiner à lire un compteur électrique à disque tournant. Le problème de cette solution est que le positionnement du dispositif est réalisé par repérage visuel et donc peu précis.

Grâce à la présente invention, la fixation et le positionnement du capteur optique sont rendus plus efficaces et sûrs, ceci ayant pour principal avantage d'augmenter sensiblement le taux d'acquisition réussie.

La solution de la présente invention permet en effet de réaliser l'opération de fixation et positionnement en deux étapes et d'avoir confirmation du bon positionnement, ce qui rend la pose plus simple, plus fiable et plus agréable pour l'utilisateur et permet donc d'augmenter le taux de réussite et le taux de satisfaction global de l'utilisateur.

Pour ce faire, la présente invention concerne un dispositif de fixation et de positionnement d'un système de lecture optique pour compteurs d'électricité de type électromécanique selon la revendication 1.

Selon un mode d'exécution, l'élément de positionnement rapide et l'élément de positionnement fin pourront être articulés autour d'un axe de rotation permettant d'appliquer un déplacement à l'élément de positionnement fin et donc au capteur qu'il porte, de façon à positionner au mieux le capteur par rapport au compteur-
l'élément de positionnement rapide pourra consister en une plaque en matière plastique transparente comportant une mire, par exemple constituée de deux marques horizontales entre lesquelles le disque du compteur peut être visé.

Avantageusement, l'articulation entre l'élément de positionnement rapide et l'élément de positionnement fin sera réalisée par un rivet passant au travers des deux éléments.

Avantageusement, le dispositif comportera un système de butée limitant le mouvement de l'élément de positionnement fin par rapport à l'élément de positionnement rapide.

Avantageusement, le dispositif comportera un système de vis dont le corps passe à travers un orifice de forme allongée, pratiqué dans l'élément de positionnement fin, et vient se visser sur l'élément de positionnement rapide, de façon à ce que le serrage de ladite vis empêche le mouvement relatif desdits éléments par pression de la tête de ladite vis sur l'élément de positionnement fin et de façon à ce que le desserrage de ladite vis permette le mouvement relatif desdits éléments.

De préférence, le capteur sera un capteur optique, par exemple une photodiode ou tout capteur sensible à la lumière/luminescence ou encore un capteur infrarouge. Dans le cas d'un capteur infrarouge, le capteur envoie un rayon infrarouge dont la réflexion sur le disque est analysée pour déterminer si le rayon a atteint la marque noire habituellement présente sur le disque ou une autre partie non marquée dudit disque.

Avantageusement, le dispositif comportera un système de traitement des variations du signal obtenu par le capteur, relié à un moyen de signalisation de l'existence ou non de caractéristiques spécifiques du signal.

Selon un mode d'exécution, ce moyen de signalisation sera une diode s'allumant et s'éteignant selon que les caractéristiques attendues du signal sont respectées ou non.

Avantageusement, la diode du moyen de signalisation s'allumera pendant une courte durée lorsque les amplitudes de variation du signal dépasseront un seuil, choisi inférieur aux amplitudes du signal provoquées par la réflexion sur la tranche du disque.

Avantageusement, le seuil sera choisi suffisamment faible pour que les variations du signal dues aux inégalités de la tranche du disque provoquent le clignotement de la diode.

Ainsi, l'utilisateur verra un clignotement lorsque le capteur sera bien aligné avec le disque, sans devoir attendre le passage de la marque noire.

Selon un autre mode d'exécution, ce moyen de signalisation sera un émetteur sonore produisant des sons selon que les caractéristiques attendues du signal sont respectées ou non.

La présente invention se rapporte également à un procédé pour la fixation et le positionnement du dispositif selon l'invention, caractérisé en ce qu'il comporte une première étape de positionnement rapide et une seconde étape de positionnement fin.

Avantageusement, l'étape de positionnement fin sera facilitée par le clignotement d'une diode.

Avantageusement, l'étape de positionnement rapide consistera à approcher le dispositif de la vitre du compteur derrière laquelle tourne le disque tout en observant le disque entre lesdites marques et à appliquer le dispositif contre la vitre de façon à ce que des adhésifs fixés à l'élément de positionnement rapide viennent se coller contre ladite vitre.

Avantageusement, l'étape de positionnement fin consistera à faire bouger l'élément de positionnement fin en observant le moyen de signalisation et à serrer la vis lorsque le moyen de signalisation fournit la bonne indication.

On comprendra mieux l'invention à l'aide de la description, faite ci-après à titre purement explicatif, d'un mode de réalisation de l'invention, en référence aux figures annexées :
- la figure 1 illustre une vue schématique de l'élément de positionnement rapide ;
- la figure 2 illustre une vue schématique de l'élément de positionnement fin ;
- la figure 3 illustre une vue schématique du dispositif illustrant l'articulation de l'élément de positionnement rapide et de l'élément de positionnement fin ;

En préalable, il est important de noter que le dispositif selon l'invention peut être utilisé avec tous les compteurs comportant un indicateur de la consommation mesurée sous forme d'un disque en rotation.

Par ailleurs, le dispositif selon l'invention comprend également un système de traitement des variations du signal obtenu par le capteur et un moyen de signalisation de l'existence ou non de caractéristiques spécifiques du signal qui ne sont pas représentés ici.

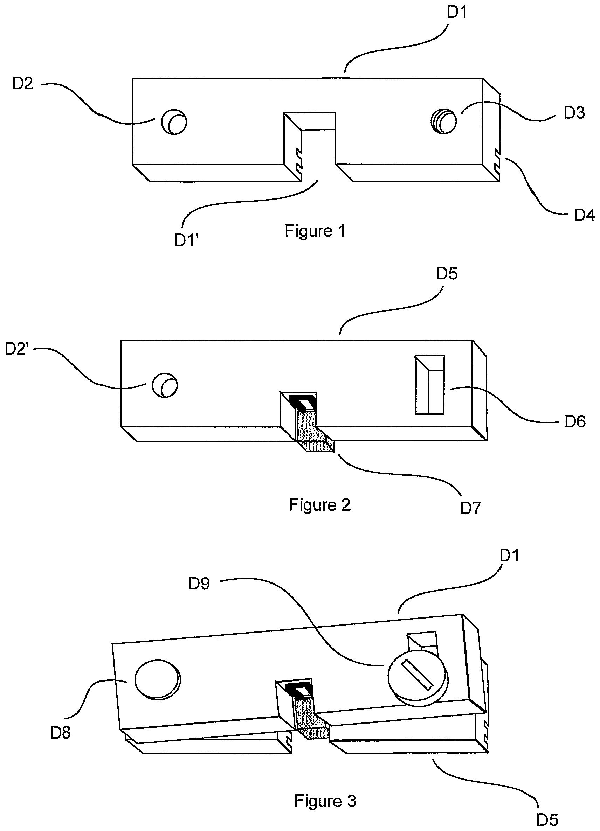

Dans le mode de réalisation représenté sur la figure 1, l'élément de positionnement rapide D1 du dispositif selon l'invention se présente sous la forme d'une plaque rectangulaire transparente comportant deux rainures parallèles D4 pratiquées dans la face arrière de l'élément.

Dans le mode de réalisation représenté sur la figure 1, l'élément de positionnement rapide D1 comporte un trou D2 destiné à permettre le passage du corps d'un rivet.

Dans le mode de réalisation représenté sur la figure 1, l'élément de positionnement rapide D1 comporte un trou fileté D3 destiné à accueillir une vis.

Dans le mode de réalisation représenté sur la figure 1, l'élément de positionnement rapide D1 comporte une encoche D1'.

Dans le mode de réalisation représenté sur la figure 2, l'élément de positionnement fin D5 du dispositif selon l'invention se présente sous la forme d'une plaque rectangulaire transparente comportant une fente D6.

Dans le mode de réalisation représenté sur la figure 2, l'élément de positionnement fin D5 comporte un trou D2' destiné à permettre le passage du corps d'un rivet.

Dans le mode de réalisation représenté sur la figure 2, l'élément de positionnement fin D5 comporte un capteur D7 fixé dans une encoche et dépassant de l'élément D5 vers l'arrière.

Dans le mode de réalisation représenté sur la figure 3, l'élément de positionnement rapide D1 et l'élément de positionnement fin D5 sont articulés par la présence d'un rivet passant à travers le trou D2 et le trou D2'.

Dans le mode de réalisation représenté sur la figure 3, une vis D9 passe à travers la fente D6 et vient se visser dans le trou fileté D3.

Ainsi, lorsque la vis est partiellement vissée dans le trou fileté D3, l'élément de positionnement fin peut bouger relativement à l'élément de positionnement rapide, tout en venant en butée aux extrémités de la fente D6.

Dans le mode de réalisation représenté sur la figure 3, la vis D9 peut être serrée de façon à ce que la tête de la vis vienne appuyer sur l'élément D5 et empêche le mouvement relatif desdits éléments par pression de la tête de ladite vis sur l'élément de positionnement fin

Dans le mode de réalisation représenté sur la figure 3, le capteur D7 fixé à l'élément D5 est positionné de façon à dépasser vers l'arrière, afin d'être au plus proche du compteur ; l'encoche D1' de l'élément D1 est de dimension suffisante pour laisser le libre mouvement au capteur.

L'invention est décrite dans ce qui précède à titre d'exemple. Il est entendu que l'homme du métier est à même de réaliser différentes variantes de l'invention sans pour autant sortir du cadre du brevet, qui est limité par la portée des revendications suivantes.

## Revendications

1. Dispositif de fixation et de positionnement d'un système de lecture optique pour compteurs d'électricité de type électromécanique comportant au moins un élément de positionnement rapide (D1) à fixer sur le compteur et un élément de positionnement fin (D5) portant un capteur (D7); l'élément de positionnement rapide (D1) et l'élément de positionnement fin (D5) étant articulés l'un par rapport à l'autre, **caractérisé en ce que** le capteur (D7) s'enfonce en direction du compteur, à travers une encoche (D1') pratiquée dans l'élément de positionnement rapide (D1), de façon à ce que le capteur (D7) soit proche du disque dudit compteur.

2. Dispositif d'acquisition selon la revendication 1, **caractérisé en ce que** l'élément de positionnement rapide (D1) et l'élément de positionnement fin (D5) sont articulés selon un axe passant à travers les deux éléments pour permettre un mouvement de rotation d'un des éléments relativement à l'autre.

3. Dispositif d'acquisition selon la revendication 1, **caractérisé en ce que** les deux éléments sont des plaques transparentes permettant la vue du disque du compteur.

4. Dispositif d'acquisition selon la revendication 1, **caractérisé en ce qu'**il comporte une vis (D9) vissée dans l'élément de positionnement rapide (D1), à travers une fente (D6) pratiquée dans l'élément de positionnement fin (D5).

5. Dispositif d'acquisition selon les revendications 1 et 4, **caractérisé en ce que**, lorsque la dite vis (D9) est serrée, la tête de ladite vis (D9) vient faire pression sur l'élément de positionnement fin (D5) et figer ainsi la position de l'élément de positionnement fin (D5) relativement à l'élément de positionnement rapide (D1).

6. Dispositif d'acquisition selon les revendications 1 et 4, **caractérisé en ce que**, lorsque la dite vis (D9) est légèrement desserrée, l'élément de positionnement fin (D5) peut être déplacé relativement à l'élément de positionnement rapide (D1) dans des limites fixées par la longueur de ladite fente (D6), qui sert ainsi de butée.

7. Dispositif d'acquisition selon la revendication 1, **caractérisé en ce qu'**il comprend un système de traitement des variations du signal obtenu par ledit capteur (D7), système relié à une diode s'allumant et s'éteignant pour signaler le bon positionnement du dispositif devant le disque du compteur.

8. Procédé pour la fixation et le positionnement d'un capteur optique sur un compteur, grâce à un dispositif selon l'une des revendications 1 à 7, **caractérisé en ce qu'**il comprend les étapes suivantes:
- fixation du dispositif sur le compteur en approchant le dispositif tout en visant le disque à travers le dispositif
- recherche de la meilleure position de l'élément de positionnement fin (D5), en faisant bouger l'élément de positionnement fin (D5) relativement à l'élément de positionnement rapide (D1) et en observant un moyen de signalisation indiquant le bon positionnement dans l'axe du disque du compteur.
- immobilisation de l'élément de positionnement fin (D5) relativement à l'élément de positionnement rapide (D1).

9. Procédé pour l'acquisition selon la revendication 8, **caractérisé en ce que** l'étape de recherche de la meilleure position comprend l'observation d'un moyen de signalisation constitué d'une diode s'allumant pendant une courte durée lorsque l'amplitude de variation du signal dépasse un seuil.

10. Procédé pour l'acquisition selon les revendications 8 et 9, **caractérisé en ce que** le seuil est suffisamment faible pour que la diode détecte les variations dues aux inégalités de la tranche du disque et s'allume en conséquence.

## Patentansprüche

1. Einrichtung zum Fixieren und zum Positionieren eines optischen Lesesystems für Stromzähler vom elektromechanischen Typ, aufweisend mindestens ein auf dem Zähler zu fixierendes Schnellpositionierungselement (D1) und ein Feinpositionierungselement (D5), das einen Sensor (D7) trägt; wobei das Schnellpositionierungselement (D1) und das Feinpositionierungselement (D5) aneinander angelenkt sind, **dadurch gekennzeichnet, dass** der Sensor (D7) durch eine in das Schnellpositionierungselement (D1) eingearbeitete Kerbe (D1') in Richtung des Zählers eindringt, so dass der Sensor (D7) in der Nähe der Scheibe des Zählers ist.

2. Erfassungseinrichtung nach Anspruch 1, **dadurch gekennzeichnet, dass** das Schnellpositionierungselement (D1) und das Feinpositionierungselement (D5) gemäß einer Achse angelenkt sind, die durch die zwei Elemente verläuft, um eine Rotationsbewegung eines der Elemente relativ zum anderen zu erlauben.

3. Erfassungseinrichtung nach Anspruch 1, **dadurch gekennzeichnet, dass** die zwei Elemente transparente Platten sind, welche die Sicht auf die Scheibe des Zählers erlauben.

4. Erfassungseinrichtung nach Anspruch 1, **dadurch gekennzeichnet, dass** sie eine Schraube (D9) aufweist, die in das Schnellpositionierungselement (D1) durch einen Schlitz (D6) geschraubt ist, der in das Feinpositionierungselement (D5) eingearbeitet ist.

5. Erfassungseinrichtung nach den Ansprüchen 1 und 4, **dadurch gekennzeichnet, dass**, wenn die Schraube (D9) angezogen ist, der Kopf der Schraube (D9) auf das Feinpositionierungselement (D5) drückt und so die Position des Feinpositionierungselements (D5) relativ zum Schnellpositionierungselement (D1) fixiert.

6. Erfassungseinrichtung nach den Ansprüchen 1 und 4, **dadurch gekennzeichnet, dass**, wenn die Schraube (D9) leicht gelöst ist, das Feinpositionierungselement (D5) relativ zum Schnellpositionierungselement (D1) innerhalb der Grenzen, die von der Länge des Schlitzes (D6) festgelegt ist, der somit als Anschlag dient, verlagerbar ist.

7. Erfassungseinrichtung nach Anspruch 1, **dadurch gekennzeichnet, dass** sie ein Verarbeitungssystem der Variationen des Signals umfasst, das von dem Sensor (D7) erhalten wird, wobei das System mit einer Diode verbunden ist, die leuchtet und erlischt, um die richtige Positionierung der Einrichtung vor der Scheibe des Zählers zu signalisieren.

8. Verfahren zum Fixieren und Positionieren eines optischen Sensors auf einem Zähler dank einer Einrichtung nach einem der Ansprüche 1 bis 7, **dadurch gekennzeichnet, dass** es die folgenden Schritte umfasst:
- Fixieren der Einrichtung auf dem Zähler durch Annähern der Einrichtung bei gleichzeitigem Visieren der Scheibe durch die Einrichtung
- Ermitteln der besten Position des Feinpositionierungselements (D5) durch Bewegen des Feinpositionierungselements (D5) relativ zum Schnellpositionierungselement (D1) und unter Beobachtung eines Signalisierungsmittels, welches die richtige Positionierung in der Achse der Scheibe des Zählers anzeigt
- Feststellen des Feinpositionierungselements (D5) relativ zum Schnellpositionierungselement (D1).

9. Erfassungsverfahren nach Anspruch 8, **dadurch gekennzeichnet, dass** der Schritt des Ermittelns der besten Position die Beobachtung eines Signalisierungsmittels umfasst, das von einer Diode gebildet ist, die während einer kurzen Dauer leuchtet, wenn die Variationsamplitude des Signals einen Grenzwert überschreitet.

10. Erfassungsverfahren nach den Ansprüchen 8 und 9, **dadurch gekennzeichnet, dass** der Grenzwert schwach genug ist, damit die Diode die Variationen ermittelt, die auf Abweichungen der Kante der Scheibe zurückzuführen sind und demzufolge leuchtet.

## Claims

1. Device for securing and positioning an optical reading system for electromechanical electricity meters comprising at least one quick positioning element (D1) to be secured on the meter and an end positioning element (D5) carrying a sensor (D7); the quick positioning element (D1) and the end positioning element (D5) being hinged against one another, **characterised in that** the sensor (D7) is extends in the direction of the meter, through a notch (D1') made in the quick positioning element (D1), such that the sensor (D7) is close to the disc of said meter.

2. Acquisition device according to claim 1, **characterised in that** the quick positioning element (D1) and the end positioning element (D5) are hinged about an axis passing through the two elements to make it possible for a rotation movement of one of the elements relative to the other.

3. Acquisition device according to claim 1, **characterised in that** the two elements are transparent plates making it possible to see the disc of the meter.

4. Acquisition device according to claim 1, **characterised in that** it comprises a screw (D9) screwed into the quick positioning element (D1), through a slot (D6) made in the end positioning element (D5).

5. Acquisition device according to claims 1 and 4, **characterised in that**, when said screw (D9) is tightened, the head of said screw (D9) is pressurised on the end positioning element (D5) relative to the quick positioning element (D1).

6. Acquisition device according to claims 1 and 4, **characterised in that**, when said screw (D9) is slightly unscrewed, the end positioning element (D5) can be moved relative to the quick positioning element (D1) within the limits set by the length of said slot (D6), which is thus used as an abutment.

7. Acquisition device according to claim 1, **characterised in that** it comprises a system for processing variations in the signal obtained by said sensor (D7), system connected to a diode lighting up and switching off to signal the correct positioning of the device in front of the disc of the meter.

8. Method for securing and positioning an optical sensor on a meter, using a device according to one of claims 1 to 7, **characterised in that** it comprises the following steps:
- securing the device on the meter by approaching the device while aiming the disc through the device.
- searching for the best position of the end positioning element (D5), by making the end positioning element (D5) move relative to the quick positioning element (D1) and by observing a signalling means indicating the correct positioning in the axis of the disc of the meter.
- immobilising the end positioning element (D5) relative to the quick positioning element (D1).

9. Acquisition method according to claim 8, **characterised in that** the step of searching for the best position comprising the observation of a signalling means constituted of a diode lighting up for a short duration when the variation amplitude of the signal exceeds a threshold.

10. Acquisition method according to claims 8 and 9, **characterised in that** the threshold is sufficiently low such that the diode detects variations due to the inequalities of the section of the disc and consequently lights up.
